# EUROPÄISCHE PATENTSCHRIFT

(11) **EP 1 198 629 B1**
(45) Veröffentlichungstag und Bekanntmachung des Hinweises auf die Patenterteilung: **07.06.2006**
(21) Anmeldenummer: 00940398.1
(22) Anmeldetag: 21.06.2000
(51) Int. Cl.: D04H 1/42, D04H 1/56

(54) **VERFAHREN ZUR HERSTELLUNG VON MIKROFASERVLIESEN ENTHALTEND CYCLOOLEFINPOLYMERE**
METHOD OF PRODUCING MICROFIBER NONWOVENS THAT CONTAIN CYCLOOLEFIN POLYMERS
PROCEDE POUR PRODUIRE DES NON-TISSES DE MICROFIBRES CONTENANT DES POLYMERES A BASE DE CYCLOOLEFINE

(30) Priorität: 05.07.1999 DE 19930979
(43) Veröffentlichungstag der Anmeldung: 24.04.2002
(73) Patentinhaber: Topas Advanced Polymers GmbH, 65926 Frankfurt am Main (DE)
(72) Erfinder: JACOBS, Alexandra, D-65527 Niedernhausen (DE); HATKE, Wilfried, D-65779 Kelkheim (DE); LAMONTE, Ronald, R., Flanders, NJ 07836 (US); MCNALLY, Donald, Chatham, NJ 07928 (US)
(74) Vertreter: Ackermann, Joachim
(86) Internationale Anmeldenummer: PCT/EP2000/005760
(87) Internationale Veröffentlichungsnummer: WO 2001/002635

(56) Entgegenhaltungen:
- WO-A-96/23010
- DE-A- 4 429 165
- JP-A- 8 041 260
- PATENT ABSTRACTS OF JAPAN vol. 1995, no. 02, 31. März 1995 (1995-03-31) & JP 06 330445 A (IDEMITSU KOSAN CO LTD), 29. November 1994 (1994-11-29)

## Beschreibung

Die vorliegende Erfindung betrifft ein Verfahren zur Herstellung von Mikrofaservliesen enthaltend Cycloolefinpolymere sowie die Verwendung der Mikrofaservliese.

EP 594 123 beschreibt Mikrofaservliese im Elektretzustand, die acyclische Polyolefine, bevorzugt Polypropylen, enthalten und durch Melt blown-Verfahren hergestellt wurden. Die JP 08-041260 beschreibt Mikrofaservliese aus Cycloolefinharzen und modifizierten, gepfropften Polymeren, die mittels Melt blow-Verfahren hergestellt werden können. In der WO 96/23010 werden u.a. Cyclopentenpolymerharze beschrieben, aus den mittels Melt blown-Verfahren "nowoven fabrics" oder Mikrofasern hergestellt werden können. Die DE 4429165 A1 beschreibt ein Filtermaterial aus ungesättigten Cycloolefinpolymeren oder-copolymeren, das zur Entfernung von Ozon aus Gasen und Flüssigkeiten genutzt werden kann. In der JP 06-330445 werden Gewebe oder Vliesstoffe beschrieben, die Cycloolefinpolymerharze mit einer Glasübergangstemperatur von <=50°C aufweisen. Aus EP 705 931 sind Vliese aus Elektretfasermischungen bekannt, die für den Einsatz als Filtermaterialien gezielt, z.B. in einer Coronaentladung, elektrostatisch aufgeladen werden und zur Erhöhung der Ladungsstabilität Ladungssteuerungsmittel aufweisen. Aus WO 98156836 sind Elektrete auf der Basis von Cycloolefincopolymeren bekannt, die sich durch eine langfristige Stabilität der aufgebrachten Ladungen auch bei hohen Temperaturen und hoher relativer Luftfeuchtigkeit auszeichnen. Es sind auch Mischungen mit Polyolefinen, wie z.B. Polypropylen beschrieben. Verfahren zur Herstellung von Mikrofaservliesen durch das Melt blown-Verfähren sind in US 3,978,185, in US 3,972,759 sowie in US 4,622,259 beschrieben. Die Aufgabe der vorliegenden Erfindung liegt darin, ein wirtschaftliches und umweltfreundliches Verfahren zur Herstellung von Mikrofaservliesen, die Cycloolefinpolymere enthalten, bereitzustellen. Das erfindungsgemäße Verfahren wird im folgenden detailliert beschrieben.

Erfindungsgemäß werden Mikrofaservliese, die Cycloolefinpolymere enthalten, durch ein Schmelzblas- (Melt blown-)Verfahren hergestellt. Das erfindungsgemäße Melt blown-Verfahren resultiert in Mikrodenier-Fasern mit Durchmessern von 0,1 bis 20µm, bevorzugt 0,5 bis 7 µm. Die durch das Melt blown-Verfahren hergestellten Fasern sind damit ca. eine Größenordnung kleiner als der kleinste Durchmesser von Fasern, die durch das Spunbond-Verfahren hergestellt werden. Das Spunbond-Verfahren ist ebenfalls grundsätzlich für die Herstellung von Mikrofaservliesen, die Cycloolefinpolymere enthalten, geeignet, kommt aber aufgrund der anderen Fasercharakteristik, z.B. Faserdurchmesser, für die Herstellung anderer Vliesqualitäten zum Einsatz.

Beim Melt blown-Verfahren wird das faserbildende Cycloolefinpolymer in einem Extruder aufgeschmolzen und auf die geeignete Temperatur gebracht und durch eine Anordnung einer Vielzahl von Extrusionsdüsen in einen heißen Luftstrom von hoher Geschwindigkeit extrudiert. Durch den heißen Luftstrom werden die Schmelzeströme so verdünnt, daß Fasern im Mikrodenier-Bereich entstehen. Die Dosenanurdnung ist im allgemeinen eine lineare Anordnung von Kapillaren mit kleinem Durchmesser. Typische Düsendurchmesser liegen bei 0,25 bis 0,5 Millimetem. Auf die durch die Düsen extrudierten Schmelzestränge trifft von beiden Seiten der Luftstrom auf. Der Luftstrom kann eine Temperatur von 100 bis 300°C haben. Die Umgebungsluft, die in den heißen Luftstrom gesogen wird, führt zu einer Abkühlung und Verfestigung des Schmelzestromes zu den Fasern.

Die Extrusionsbedingungen sowie die Temperatur und Geschwindigkeit des Luftstromes können an das Fließverhalten des Cycloolefinpolymers angepaßt werden, um eine Optimierung des Prozeßablaufes bzw. der Vliesqualität zu erreichen. Die Fasern werden auf ein Transportband als Vlies abgelegt. Die Verwirrung der Fasern und die Faser-Faser-Kohäsion führt zu einer ausreichenden Festigkeit des Vlieses, um dieses ohne weitere Verfestigung zu verwenden.

Darüber hinaus kann eine zusätzliche Verfestigung prinzipiell in jeder bekannten Weise erfolgen. So ist es beispielsweise möglich, das Vlies durch einen Binder zu verfestigen, mit dem das Vlies imprägniert wird und der anschließend ausgehärtet wird, oder der Binder kann ein Schmelzbinder sein, der z.B. in Pulverform oder in Form von Binderfäden in das Vlies eingearbeitet wird, und der das Vlies unter Wärmeeinwirkung zum Vliesstoff verfestigt.

Das Vlies kann auch mechanisch verfestigt werden, z.B. durch das Nadeln oder durch hydromechanische Verfestigung, wie sie z.B. in EP-A-0 108 621 beschrieben ist. Eine Kombination der verschiedenen Verfestigungen kann nach Bedarf ebenfalls erfolgen.

Die Fasern können, statt auf ein Transportband abgelegt zu werden, auch auf ein Spinnfaservlies abgelegt werden und gegebenenfalls anschließend thermisch verfestigt und verbunden werden. Auf diese Weise können auch Sandwich-Konstruktionen verschiedener Vliese hergestellt werden.

Für die Herstellung von Mikrofaservliesen nach dem erfindungsgemäßen Verfahren wird mindestens ein Cycloolefinpolymer eingesetzt, welches polymerisierte Einheiten enthält, die sich von mindestens einem cyclischen, insbesondere polycyclischen Olefin und gegebenenfalls von mindestens einem acyclischen Olefin ableiten.

Der Begriff Cycloolefinpolymer umfaßt Cycloolefincopolymere wie auch Cycloolefinhomopolymere.

Für die Herstellung von Mikrofaservliesen nach dem erfindungsgemäßen Verfahren wird mindestens ein Cycloolefinpolymer eingesetzt, enthaltend 0,1 bis 100 Gew.-%, bevorzugt 0,1 bis 99,9 Gew.-%, besonders bevorzugt 3 bis 75 mol% bezogen auf die Gesamtmasse des Cycloolefinpolymers, polymerisierte Einheiten, welche sich ableiten von mindestens einem polycyclischen Olefin der Formeln I, II, II', III, IV, V oder VI 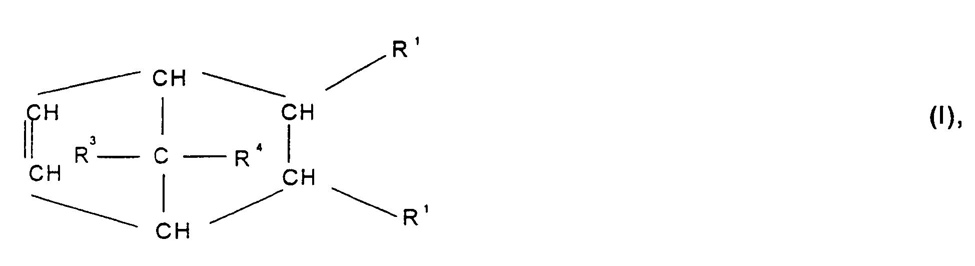 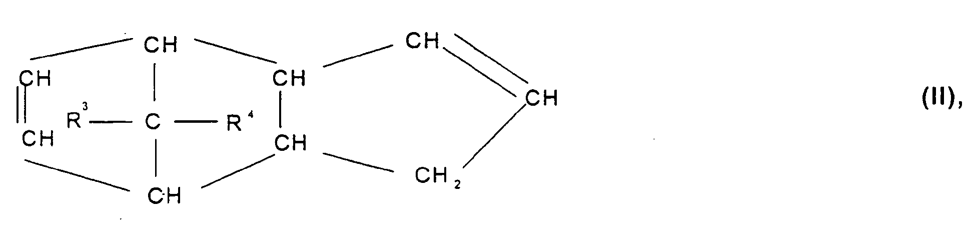 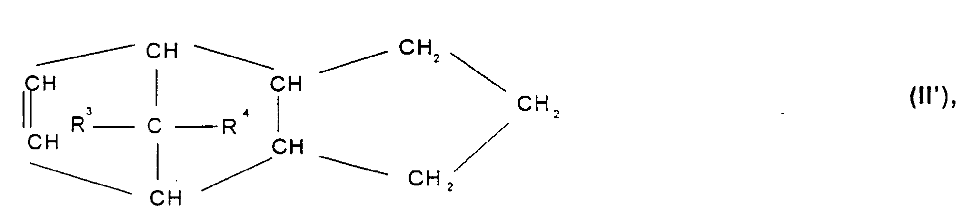 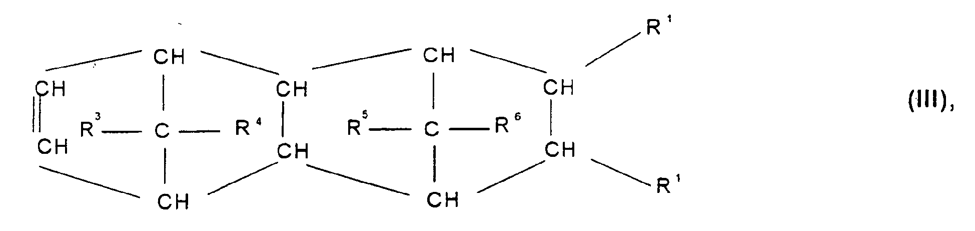 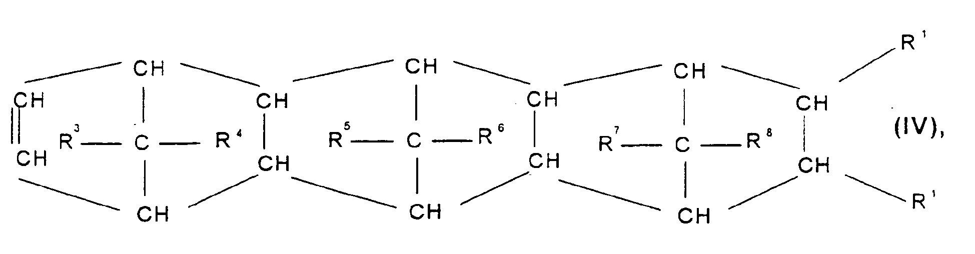 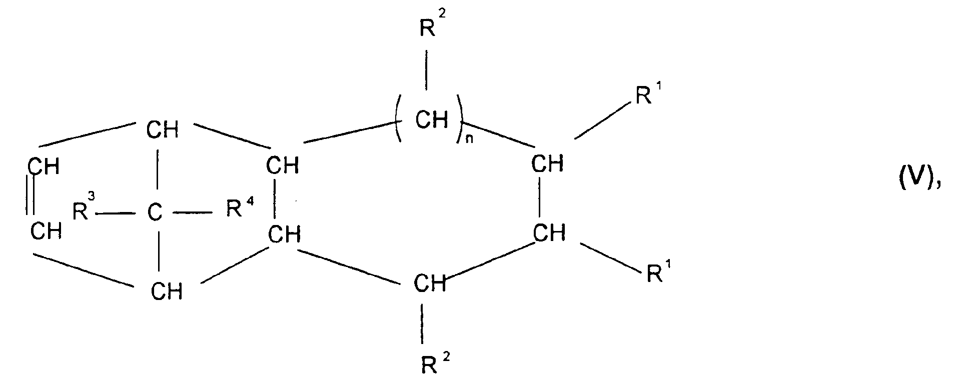 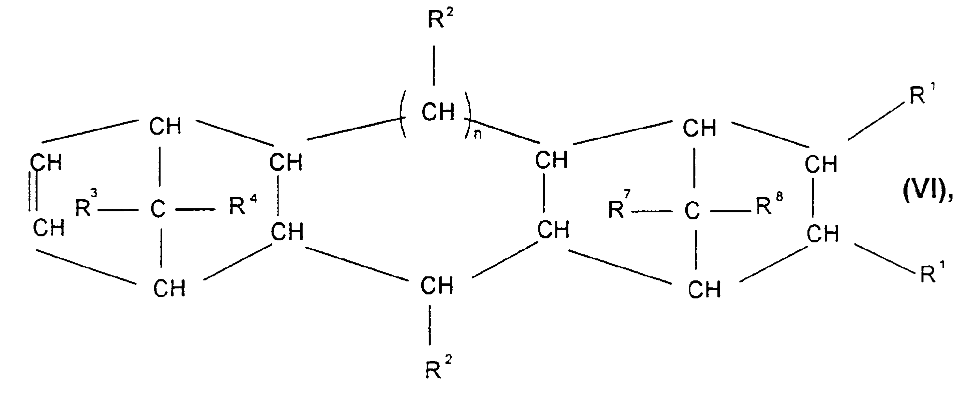 worin R¹, R², R³, R⁴, R⁵, R⁶, R⁷ und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und enthaltend 0 bis 99,9 Gew.-%, bevorzugt 0,1 bis 99,9 Gew.-%, besonders bevorzugt 5 bis 80 mol% bezogen auf die Gesamtmasse des Cycloolefinpolymers, polymerisierte Einheiten, welche sich ableiten von einem oder mehreren acyclischen Olefinen der Formel VII 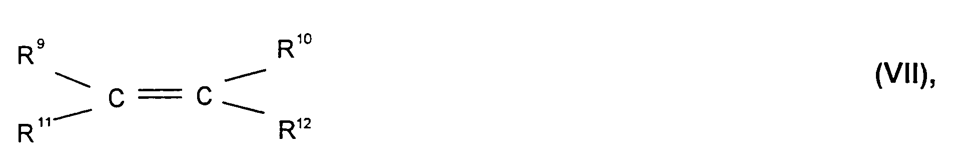 worin R⁹, R¹⁰, R¹¹ und R¹² gleich oder verschieden sind und ein Wasserstoffatom, einen linearen, verzweigten, gesättigten oder ungesättigten C₁-C₂₀₋Kohlenwasserstoffrest wie einen C₁-C₈-Alkylrest oder einen C₆-C₁₈-Arylrest bedeuten.

Bei den cyclischen Olefinen eingeschlossen sind ebenfalls Derivate dieser cyclischen Olefine mit polaren Gruppen wie Halogen-, Hydroxyl-, Ester-, Alkoxyx-, Carboxy-, Cyano-, Amido-, Imido- oder Silylgruppen.

Außerdem können die erfindungsgemäß für die Herstellung von Mikrofaservliesen eingesetzten Cycloolefinpolymere 0 bis 45 Gew.-%, bezogen auf die Gesamtmasse des Cycloolefinpolymers, polymerisierte Einheiten enthalten, welche sich ableiten von einem oder mehreren monocyclischen Olefinen der Formel VIII 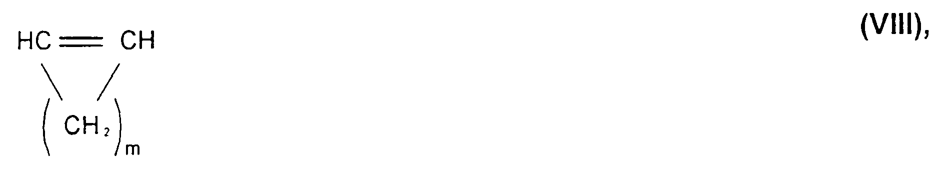 worin m eine Zahl von 2 bis 10 ist.

Bevorzugt im Sinne der Erfindung sind Cycloolefinpolymere, die polymerisierte Einheiten enthalten, welche sich ableiten von polycyclischen Olefinen der Formeln I oder III, und polymerisierte Einheiten, welche sich ableiten von acyclischen Olefinen der Formel VII.

Besonders bevorzugt sind Cycloolefinpolymere, die polymerisierte Einheiten enthalten, welche sich ableiten von Olefinen mit Norbornengrundstruktur, ganz besonders bevorzugt von Norbornen und Tetracyclododecen und gegebenenfalls Vinylnorbornen oder Norbornadien. Besonders bevorzugt sind auch Cycloolefinpolymere, die polymerisierte Einheiten enthalten, welche sich ableiten von acyclischen Olefinen mit endständigen Doppelbindungen wie α-Olefinen mit 2 bis 20 C-Atomen, ganz besonders bevorzugt Ethylen oder Propylen. Außerordentlich bevorzugt sind Norbornen/ Ethylen- und Tetracyclododecen/ Ethylen-Copolymere.

Die Herstellung der Cycloolefinpolymere kann durch eine heterogene oder homogene Katalyse mit metallorganischen Verbindungen geschehen, die in einer Vielzahl von Patenten beschrieben ist.

Die erfindungsgemäß verwendeten Cycloolefinpolymere können hergestellt werden bei Temperaturen von -78 bis 200 °C und einem Druck von 0,01 bis 200 bar, in Gegenwart eines oder mehrerer Katalysatorsysteme, welche mindestens eine Übergangsmetallverbindung und gegebenenfalls einen Cokatalysator und gegebenenfalls ein Trägermaterial enthalten. Als Übergangsmetallverbindungen eignen sich Metallocene, insbesondere stereorigide Metallocene. Beispiele für Katalysatorsysteme, welche für die Herstellung der erfindungsgemäßen Cycloolefinpolymere geeignet sind, sind beschrieben in EP-A-407 870, EP-A-485 893 und EP-A-503 422.

Die Herstellung der erfindungsgemäß verwendeten Cycloolefinpolymere kann unter Verwendung eines Metallocens als Übergangsmetallverbindung und einem Aluminoxan erfolgen

Beispiele für eingesetzte Übergangsmetallverbindungen sind:
rac-Dimethylsilyl-bis-(1-indenyl)-zirkondichlorid,
rac-Dimethylgermyl-bis-(1-indenyl)-zirkondichlorid,
rac-Phenylmethylsilyl-bis-(1-indenyl)-zirkondichlorid,
rac-Phenylvinylsilyl-bis-(1-indenyl)-zirkondichlorid,
1-Silacyclobutyl-bis-(1-indenyl)-zirkondichlorid,
rac-Diphenylsilyl-bis-(1-indenyl)-hafniumdichlorid,
rac-Phenylmethylsilyl-bis-(1-indenyl)-hafniumdichlorid,
rac-Diphenylsilyl-bis-(1-indenyl)-zirkondichlorid,
rac-Ethylen-1,2-bis-(1-indenyl)-zirkondichlorid,
Dimethylsilyl-(9-fluorenyl)-(cyclopentadienyl)-zirkondichlorid,
Diphenylsilyl-(9-fluorenyl)-(cydopentadienyl)-zirkondichlorid,
Bis(1-indenyl)-zirkondichlorid,
Diphenylmethylen-(9-fluorenyl)-cyclopentadienylzirkondichlorid,
tsopropylen-(9-fluorenyl)-cyclopentadienyl-zirkondichlorid,
rac-tsopropyliden-bis-(1-indenyl)zirkondichlorid,
Phenylmethylmethyfen-(9-fluorenyl)-cyclopentadienyl-zirkondichlorid,
Isopropylen-(9-fluorenyl)-(1-(3-isopropyl)cyclopentadienyl)-zirkondichlorid,
Isopropylen-(9-fluorenyl)(1-(3-methyl)cyclopentadienyl)-zirkondichlorid,
Diphenylmethylen-(9-fluorenyl)(1-(3-methyl)cyclopentadienyl)-zirkondichlorid,
Methylphenylmethylen-(9-ffuorenyl)(1-(3-methyl)cyclopentadienyl)-zirkondichlorid,
Dimethylsilyl-(9-fluorenyl)(1-(3-methyl)-cyclopentadienyl)-zirkondichlorid,
Diphenylsilyl-(9-fluorenyl)(1-(3-methyl)cyclopentadienyl)-zirkondichlorid,
Diphenylmethylen-(9-fluorenyl)(1-(3-tert.-butyl)cyclopentadienyl)-zirkondichlorid,
Isopropylen-(9-fluorenyl)(1-(3-tert.-butyl)cyclopentadienyl)-zirkondichlorid,
Isopropylen-(cyclopentadienyl)-(1-indenyl)-zirkondichlorid,
Diphenylcarbonyl-(cyclopentadienyl)-(1-indenyl)-zirkondichlorid,
Dimethylsilyl-(cyclopentadienyl)-(1-indenyl)-zirkondichlorid,
Isopropylen-(methylcyclopentadienyl)-(1-indenyl)-zirkondichlorid, 4-(η⁵⁻cyclopentadienyl)-4,7,7-trimethyl-(η⁵-4,5,6,7-tetrahydroindenyl-zirkondichlorid,
[4-(η⁵-cyclopentadienyl)-4,7,7-triphenyl-(η⁵-4,5,6,7-tetrahydroindenyl)]zirkondichlorid,
[4-(η⁵-cyclopentadienyl)-4,7-dimethyl-7-phenyl-(η⁵-4,5,6,7-tetrahydroindenyl)]zirkondichlorid,
[4-(η⁵-3'-tert.-butylcyclopentadienyl)-4,7,7-triphenyl-(η⁵-4,5,6,7-tetrahydroindenyl)]zirkondichlorid,
[4-(η⁵-3'-tert.-butylcyclopentadienyl)-4,7-dimethyl-7-phenyl-(η⁵-4,5,6,7-tetrahydroindenyl)]zirkondichiorid,
[4-(η⁵-3'-methylcyclopentadienyl)-4,7,7-trimethyl-(η⁵-4,5,6,7-tetrahydroindenyl)]zirkondichlorid,
[4-(η⁵-3'-methylcyclopentadienyl)-4,7,7-triphenyl-(η⁵-4,5,6,7-tetrahydroindenyl)]zirkondichlorid,
[4-(η⁵-3'-methylcyclopentadienyl)-4,7-dimethyl-7-phenyl-(η⁵-4,5,6,7-tetrahydroindenyl)]zirkondichlorid,
[4-(η⁵-3'-isopropylcyclopentadienyl)-4,7,7-trimethyl-(η⁵-4,5,6,7-tetrahydroindenyl)]zirkondichforid,
[4-(η⁵-3'-isoproplycyclopentadienyl)-4,7,7-triphenyl-(η⁵-4,5,6,7-tetrahydroindenyl)]zirkondichlorid,
[4-(η⁵-3'-isopropylcyclopentadienyl)-4,7-dimethyl-7-phenyl-(η⁵-4,5,6,7-tetrahydroindenyl)]zirkondichlorid,
[4-(η⁵-cyclopentadienyl)(η⁵-4,5-tetrahydropentalen)]zirkondichlorid,
[4-(η⁵-cyclopentadienyl)-4-methyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-cyclopentadienyl)-4-phenyl-(η⁵-4,5-tetrahydropentalen)]zirkondichlorid,
[4-(η⁵-3'-methyl-cyclopentadienyl)(η⁵-4,5-tetrahydropentalen)]zirkondichlorid,
[4-(η⁵-3'-isopropylcyclopentadienyl)(η⁵-4,5-tetrahydropentalen)]zirkondichlorid,
[4-(η⁵-3'-benzyl-cyclopentadienyl)(η⁵-4,5-tetrahydropentalen)]zirkondichlorid,
[2,2,4Trimethyl-4-(η⁵-cyclopentadienyl)-(η⁵-4,5-tetrahydropentalen)]-zirkoniumdichlorid,
[2,2,4Trimethyl-4-(η⁵-(3,4-Di-isopropyl)cyclopentadienyl)-(η⁵-4,5-tetrahydropentafen)]-zirkoniumdichlorid.

Die Herstellung der Cycloolefinpolymere kann auch auf anderen, nachfolgend kurz skizzierten Wegen erfolgen. Katalysatorsysteme basierend auf Mischkatalysatoren aus Titansalzen und Aluminiumorganylen werden in DD-A-109 224 und DD-A-237 070 beschreiben. EP-A-156 464 beschreibt die Herstellung mit Katalysatoren auf Vanadiumbasis. EP-A-283 164, EP-A-407 870, EP-A-485 893 und EP-A-503 422 beschreiben die Herstellung von Cycloolefinpolymeren mit Katalysatoren basierend auf löslichen Metallocenkomplexen. Auf die in diesen Patenten zur Herstellung von Cycloolefinpolymeren beschriebenen Herstellungsverfahren und verwendeten Katalysatorsysteme wird hiermit ausdrücklich hingewiesen.

Die Herstellung erfindungsgemäß verwendeter Cycloolefinpolymere kann durch Homo- und/oder Copolymerisation cyclischer, bevorzugt polycyclicher Olefine unter Ringerhalt erfolgen.

Die Cycloolefinpolymere können auch durch ringöffnende Polymerisation mindestens eines der Monomere der Formeln I bis VI und anschließende Hydrierung der erhaltenen Produkte hergestellt werden. Gegebenenfalls können die Cycloolefinpolymere auch durch ringöffnende Copolymerisation mindestens eines der Monomere der Formeln I bis VI mit weiteren, z.B. monocyclischen Monomeren der Formel VIII und anschließende Hydrierung der erhaltenen Produkte hergestellt werden. Die Herstellung der Cycloolefinpolymere ist in den japanischen Patenten 3-14882, 3-122137, 4-63807, 2-27424 und 2-276842 beschrieben. Auf die in diesen Patenten zur Herstellung von Cycloolefinpolymeren beschriebenen Herstellungsverfahren und verwendeten Katalysatorsysteme wird hiermit ausdrücklich hingewiesen. Eingeschlossen sind ebenfalls Derivate dieser cyclischen Olefine mit polaren Gruppen, wie Halogen-, Hydroxyl-, Ester-, Alkoxy-, Carboxy-, Cyano-, Amido-, Imido- oder Silylgruppen.

Hydrierte Polymere und Copolymere, wie z.B. von Styrol und Dicyclopentadien sind ausdrücklich ebenfalls geeignet und werden im Rahmen dieser Anmeldung ebenfalls als Cycloolefinpolymere bezeichnet.

Die Polymerisation kann auch mehrstufig erfolgen, wobei auch Blockcopolymere entstehen können (DE-A-42 05 416).

Cycloolefinpolymere sind bevorzugt amorphe, transparente und farblose Werkstoffe. Die Wärmeformbeständigkeiten der Cyclootefinpolymere lassen sich in einem weiten Bereich einstellen. Als Anhaltspunkt für die Wärmeformbeständigkeit, wie sie nach ISO 75 Teil 1 und Teil 2 an Spritzgußformkörpern bestimmt werden kann, läßt sich für Cycloolefinpolymere die Glasübergangstemperatur heranziehen. Die beschriebenen Cycloolefinpolymere weisen Glasübergangstemperaturen zwischen -50 und 220 °C auf. Bevorzugt sind Glasübergangstemperaturen zwischen 0 und 180 C, besonders bevorzugt sind Glasübergangstemperaturen zwischen 40 und 180 C.

Die mittlere Molmasse der Cycloolefinpolymere läßt sich durch Wasserstoff-Dosierung, Variation der Katalysatorkonzentration oder Variation der Temperatur in bekannter Weise steuern. Die in den nach dem erfindungsgemäßen Verfahren hergestellten Mikrofaservliese enthaltenen Cycloolefinpolymere weisen massenmittlere Molmassen Mw zwischen 1.000 und 10.000.000 g/mol auf. Bevorzugt sind massenmittlere Molmassen Mw zwischen 5.000 und 5.000.000 g/mol, besonders bevorzugt sind massenmittlere Molmassen Mw zwischen 10.000 und 1.200.000 g/mol.

Die in den nach dem erfindungsgemäßen Verfahren hergestellten Mikrofaservliesen enthaltenen Cycloolefinpolymere weisen Viskositätszahlen zwischen 5 und 1.000 ml/g auf. Bevorzugt sind Viskositätszahlen zwischen 20 und 500 ml/g, besonders bevorzugt sind Viskositätszahlen zwischen 30 und 300 ml/g.

Die Verarbeitung der Cycloolefinpolymere nach dem erfindungsgemäßen Verfahren erfolgt bei Temperaturen von 50 bis 200°C oberhalb der Wärmeformbeständigkeit HDT/B (Heat distortion temperature), bevorzugt bei 80 bis 180°C oberhalb HDT/B, besonders bevorzugt bei 100 bis 160°C oberhalb HDT/B.

Das erfindungsgemäße Verfahren zur Herstellung von Mikrofaservliesen wird bevorzugt mit einem Luftstrom einer Temperatur von 70 bis 250°C oberhalb Wärmeformbeständigkeit HDT/B (Heat distortion temperature), besonders bevorzugt bei 100 bis 200°C oberhalb HDT/B, ganz besonders bevorzugt bei 120 bis 170°C oberhalb HDT/B durchgeführt.

Das Fließverhalten der für das erfindungsgemäße Verfahren eingesetzten Cycloolefinpolymere hat Einfluß auf die Verfahrensführung und die Qualität des Vlieses. Für das erfindungsgemäße Verfahren haben sich daher Cycloolefinpolymere als besonders geeigenet erwiesen, die einen MVR von 1 bis 300 ml/10min, bevorzugt von 2 bis 200 ml/10min, besonders bevorzugt von 5 bis 80 ml/10min aufweisen.

Die Extrusionsbedingungen sowie die Temperatur und Geschwindigkeit des Luftstromes können an das Fließverhalten des Cycloolefinpolymers angepaßt werden, um eine Optimierung des Prozeßablaufes bzw. der Vliesqualität zu erreichen.

Das erfindungsgemäße Verfahren hat sich als besonders geeignet erwiesen, Mikrofaservliese hoher Qualität herzustellen. Das erfindungsgemäße Verfahren zeichnet sich dadurch aus, daß keine signifikanten Mengen an losen Fasern oder Faserbruchstücken entstehen, sogenanntes "fly". Diese losen Fasern oder Faserbruchstücke können in nicht erfindungsgemäßen Verfahren zu einer Störung des Prozeßablaufs und zu Defekten am Vlies führen.

Für die Herstellung von Mikrofaservliesen nach dem erfindungsgemäßen Verfahren können auch Legierungen aus mindestens einem Cycloolefinpolymer und mindestens einem weiteren Polymer in beliebigem Mischungsverhältnissen eingesetzt werden.

Für die Legierungen mit Cycloolefinpolymeren sind bevorzugt folgende Polymere einsetzbar: Polyethylen, Polypropylen, Ethylen-Propylen-Copolymere, Polybutylen, Poly(4-methyl-1-penten), Polyisopren, Polyisobutylen, Naturkautschuk, Poly(1-methylenmetacrylat), weitere Polymetacrylate, Polyacrylat, Acrylat-Metacrylat-Copolymere, Polystyrol, Styrol-Acrylnitril-Copolymer, Bisphenol-A-Polycarbonat, weitere Polycarbonate, aromatische Polyestercarbonate, Polyethylenterephthalat, Polybutylenterephthalat, amorphe Polyacrylat, Nylon - 6, Nylon - 66, weitere Polyamide, Polyaramide, Polyetherketone, Polyoxymethylen, Polyoxyethylen, Polyurethane, Polysulfone, Polyethersulfone, Polyvinylidenfluorid.

Für Legierungen von Cycloolefinpolymeren und Polyolefinen werden bevorzugt folgende Polyolefine eingesetzt: Homopolymere des Ethylens und Propylens sowie Copolymere aus diesen beiden Monomeren, Copolymere auf der Basis von Ethylen mit linearen oder verzweigten Olefinen, wie Buten, Penten, Hexen, Hepten, Octen, Nonen, Decen, Undecen und Dodecen, Copolymere auf der Basis von Propylen mit linearen oder verzweigten Olefinen, wie Buten, Penten, Hexen, Hepten, Octen, Nonen, Decen, Undecen und Dodecen, Terpolymere aus Ethylen, Propylen und linearen oder verzweigten Olefinen, wie Buten, Penten, Hexen, Hepten, Octen, Nonen, Decen, Undecen und Dodecen.

Die Herstellung der Legierungen kann durch übliche Verfahren erfolgen, z. B. durch gemeinsame Extrusion der Polymerkomponenten aus der Schmelze, gegebenenfalls unter Verwendung weiterer Additive, und anschließende Granulierung.

Das erfindungsgemäße Verfahren kann unter Verwendung von Additiven in üblichen Mengen durchgeführt werden, wie z.B. Plastifiziermittel, UV-Stabilisatoren, optische Aufheller, Antioxidantien, Anstistatika, Wärmestabilisatoren. Die genannten Additive können bereits vor der Verarbeitung den Polymermaterialien zugegeben worden sein oder aber während der Verarbeitung zugegeben werden.

Es hat sich gezeigt, daß die genaue Auswahl der Temperatur und Geschwindigkeit des Luftstromes merklichen Einfluß auf die Anzahl der entstehenden losen Fasern oder Faserbruchstücke hat. Das erfindungsgemäße Verfahren zeichnet sich dadurch aus, daß keine signifikanten Mengen an losen Fasern oder Faserbruchstücken entstehen, sogenanntes "fly", die sonst zu einer Störung des Prozeßablaufs und zu Defekten am Vlies führen können.

Eine besondere Ausgestaltung des erfindungsgemäßen Verfahrens liegt darin, die Mikrofaservliese elektrostatisch aufzuladen, z.B. durch Coronabehandlung oder durch triboelektrische Aufladung, und als elektrostatisch aufgeladene Mikrofaservliese, sogenannte Elektrete, einzusetzen.

Die durch das erfindungsgemäße Verfahren hergestellten Mikrofaservliese weisen durch eine Vielzahl sehr feiner Fasern eine Struktur mit einer sehr großen Oberfläche und kleinen Porengröße auf.

Die durch das erfindungsgemäße Verfahren hergestellten Mikrofaservliese zeichnen sich durch eine sehr gute Resistenz gegenüber Chemikalien und Feuchtigkeit aus sowie durch eine hervorragende langfristige Stabilität der aufgebrachten Ladungen auch bei hohen Temperaturen und hoher relativer Luftfeuchtigkeit.

Das Flächengewicht der nach dem erfindungsgemäßen Verfahren hergestellten Mikrofaservliese richtet sich nach dem geplanten Einsatz und läßt sich über die Auswahl des Materials sowie der Verarbeitungsbedingungen gezielt einstellen. Das Flächengewicht der nach dem erfindungsgemäßen Verfahren hergestellten Mikrofaservliese liegt zwischen 1 und 300 g/m², bevorzugt zwischen 2 und 200 g/m², besonders bevorzugt zwischen 5 und 50 g/m².

Die durch das erfindungsgemäße Verfahren hergestellten Mikrofaservliese eignen sich daher für den Einsatz als Ölabsorber, als Filtermaterialien, z.B. für die Aufnahme feiner Partikel aus Gasen oder Flüssigkeiten, als Produkte im medizinischen/Hospitalbereich und als Isolierungsmaterialien.

Besonders in Form der elektrostatisch aufgeladenen Mikrofaservliese eignen sich die nach dem erfindungsgemäßen Verfahren hergestellten Mikrofaservliese als Partikelfilter im Bereich der Raumluft- und Reinraumtechnik, der Haustechnik, z.B. als Mikrofilter in Staubsaugern, als Pkw-Innenraumfilter sowie im Bereich Atemschutz, z. B. als partikelfiltrierende Atemmasken. Ein besonderer wirtschaftlicher sowie sicherheitstechnischer Aspekt ist die aufgrund der ausgezeichneten Ladungsstabilität gegebene Lebensdauer der nach dem erfindungsgemäßen Verfahren hergestellten Mikrofaservliese auch unter Umgebungsbedingungen von höherer Temperatur und hoher relativer Luftfeuchte.

Die MVR-Messungen werden nach ISO 1133 bei einer Temperatur T_{MVR} = HDT/B + 115°C und Masse 2,16 kg durchgeführt.

Die Durchführung der Messungen zur Bestimmung der HDT erfolgt nach ISO 75, Teil 1 und 2 (0,46 MPa).

Die Erfindung wird anhand der folgenden Beispiele näher erläutert.

### Beispiele

### Beispiel 1

Mikrofaservliese wurden hergestellt unter Verwendung eines Cycloolefinpolymers ® TOPAS (Ticona GmbH, Frankfurt/ Deutschland) mit einem MVR von 28 ml/10min und einer HDT/B von 131°C.

Das Polymer wurde verarbeitet bei einem Temperaturprofil von <80°C/ 235°C/ 245°C/ 255°C/ Düse 265°C und unter verschiedenen Temperaturen und Drücken des Luftstromes.

Es wurde eine Reihe von Mikrofaservliesen unterschiedlicher Faserstärke und unterschiedlichen Flächengewichtes erhalten.

| Versuch Nr. | Flächengewicht [g/m²] | Durchschnittlicher Faserdurchmesser [µm] | Lufttemperatur [°C] | Luftdruck [bar] |
|---|---|---|---|---|
| 1-1 | 39 | 3,7 | 285 | 0,5 |
| 1-2 | 45 | 5 | 278 | 0,5 |
| 1-3 | 50 | 6,5 | 271 | 0,3 |
| 1-4 | 53 | 7 | 268 | 0,3 |
| 1-5 | 60 | 10 | 260 | 0,2 |

### Beispiel 2

Mikrofaservliese wurden hergestellt unter Verwendung eines Cycloolefinpolymers ® TOPAS (Ticona GmbH, Frankfurt/ Deutschland) mit einer MVR von 28 ml/10min und einer HDT/B von 131°C.

Das Polymer wurde verarbeitet bei einem Temperaturprofil von <80°C/ 245°C/ 255°C/ 265°C/ Düse 270°C und unter verschiedenen Temperaturen und Drücken des Luftstromes.

Es wurde eine Reihe von Mikrofaservliesen unterschiedlicher Faserstärke und unterschiedlichen Flächengewichtes erhalten.

| Versuch Nr. | Flächengewicht [g/m2] | Durchschnittlicher Faserdurchmesser [µm] | Lufttemperatur [°C] | Luftdruck [bar] |
|---|---|---|---|---|
| 2-1 | 18 | 1,9 | 294 | 0,7 |
| 2-2 | 26 | 2,8 | 290 | 0,6 |
| 2-3 | 32 | 3,1 | 283 | 0,6 |
| 2-4 | 43 | 4,7 | 275 | 0,5 |

## Patentansprüche

1. Verfahren zur Herstellung von Mikrofaservliesen, bestehend aus mindestens einem Cycloolefincopolymer mit einem MVR von 1 bis 300 ml/10min, durch das Schmelzblas- (Melt blown-) Verfahren, wobei das Cycloolefincopolymer 0,1 bis 99 Gew.-%, bezogen auf die Gesamtmasse des Cycloolefincopolymers, polymerisierte Einheiten enthält, welche sich ableiten von mindestens einem polycyclischen Olefin der Formeln I, II, II', III, IV, V oder 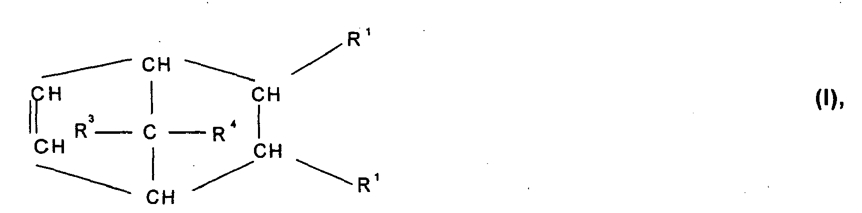 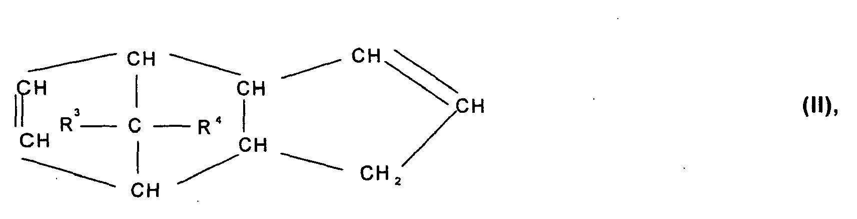 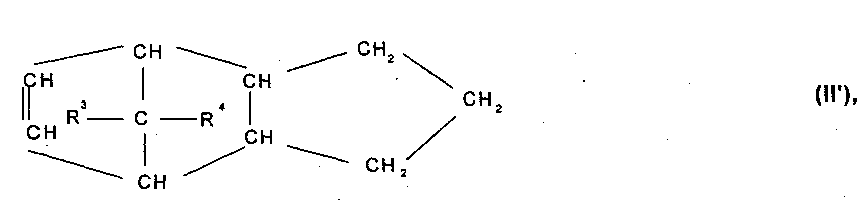 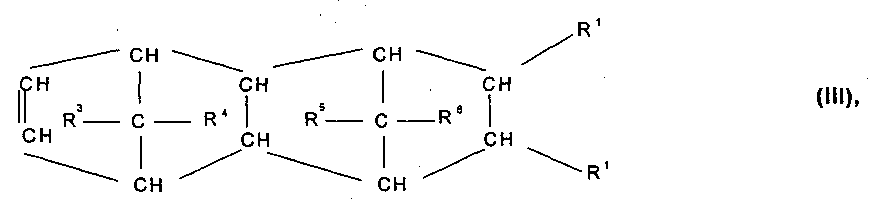 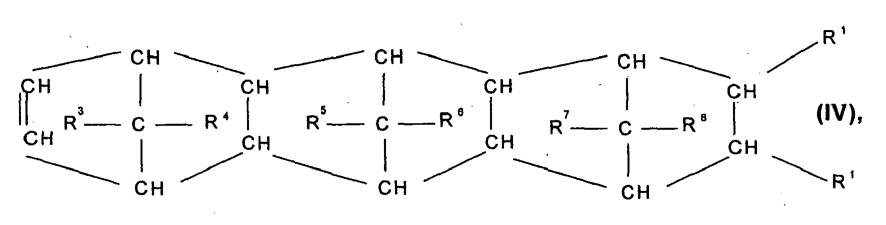 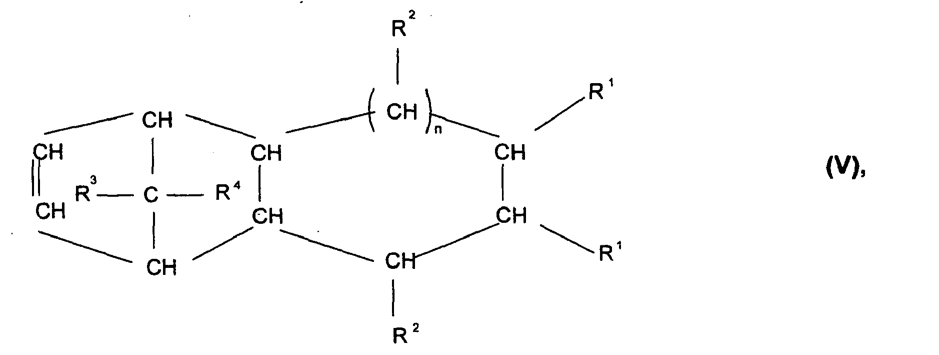 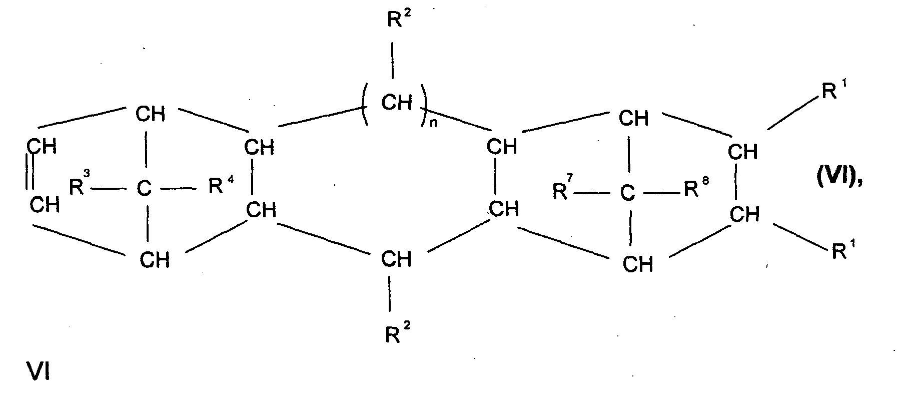 worin R¹, R², R³, R⁴, R⁵, R⁶, R⁷und R⁸ gleich oder verschieden sind und ein Wasserstoffatom oder einen C₁-C₂₀-Kohlenwasserstoffrest, wie einen linearen oder verzweigten C₁-C₈-Alkylrest, C₆-C₁₈-Arylrest, C₇-C₂₀-Alkylenarylrest,
einen cyclischen oder acyclischen C₂-C₂₀-Alkenylrest bedeuten, oder einen gesättigten, ungesättigten oder aromatischen Ring bilden, wobei gleiche Reste R¹ bis R⁸ in den verschiedenen Formeln I bis VI eine unterschiedliche Bedeutung haben können, worin n Werte von 0 bis 5 annehmen kann, und 0,1 bis 99,9 Gew-%, bezogen auf die Gesamtmasse des Cycloolefincopolymers, polymerisierte Einheiten enthält, welche sich ableiten von einem oder mehreren acyclischen Olefinen der Formel VII 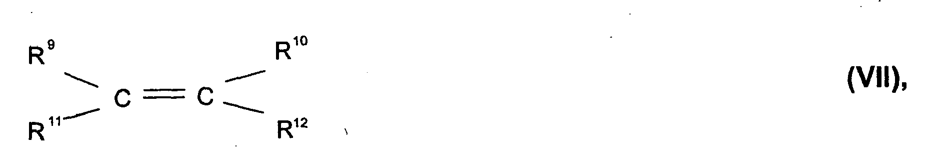 worin R⁹, R¹⁰, R¹¹ und R¹² gleich oder verschieden sind und ein Wasserstoffatom, einen linearen, verzweigten, gesättigten oder ungesättigten C₁-C₂₀-Kohlenwasserstoffrest wie einen C₁-C₈-Alkylrest oder einen C₆-C₁₈₋Arylrest bedeuten, und 0 bis 45 Gew.-%, bezogen auf die Gesamtzusammensetzung des Cycloolefincopolymers, polymerisierte Einheiten enthält, welche sich ableiten von einem oder mehreren monocyclischen Olefinen der Formel VIII, 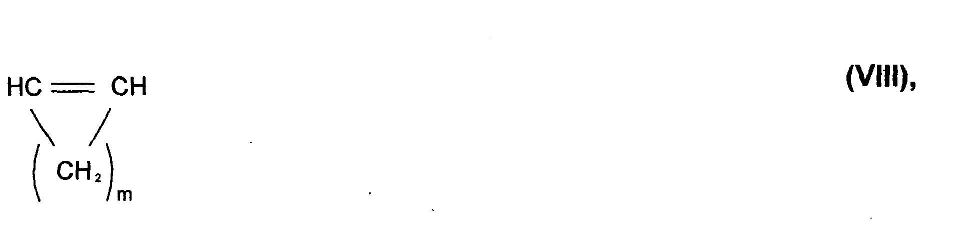 worin m eine Zahl von 2 bis 10 ist.

2. Mikrofaservlies erhältlich nach Anspruch 1.

3. Verwendung des Mikrofaservlieses nach Anspruch 1 oder 2 als Ölabsorber oder Isolationsmaterial.

4. Verwendung des Mikrofaservliese nach Anspruch 1 oder 2 als Partikelfilter im Bereich der Raumluft- und Reinraumtechnik, der Haustechnik, als Mikrofilter in Staubsaugern, als Pkw-Innenraumfilter sowie im Bereich Atemschutz, als Partikel filtrierende Atemmasken.

## Claims

1. A process for producing microfiber webs consisting of at least one cycloolefin copolymer having an MVR of 1 to 300 ml/10 min by melt-blowing, wherein the cycloolefin copolymer contains 0.1 to 99% by weight, based on the total mass of the cycloolefin copolymer, of polymerized units derived from at least one polycyclic olefin of the formulae I, II, II', III, IV, V or VI 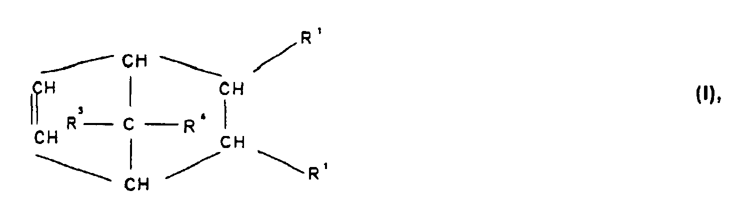 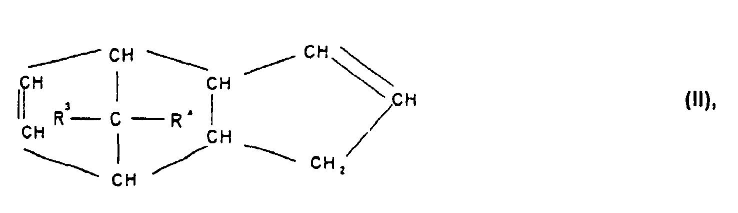 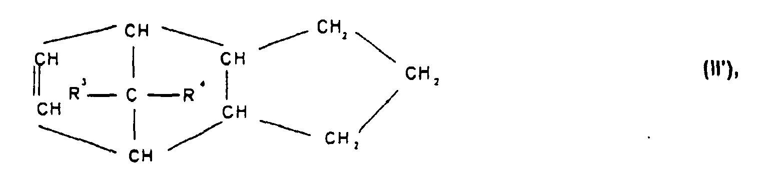 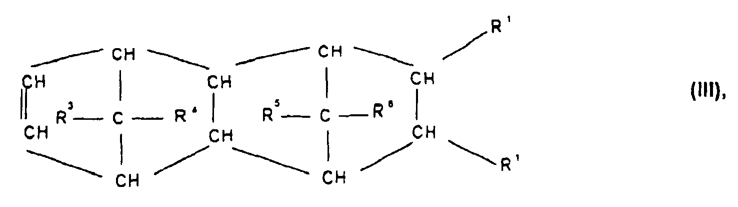 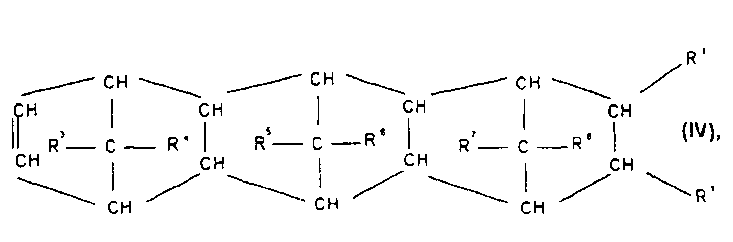 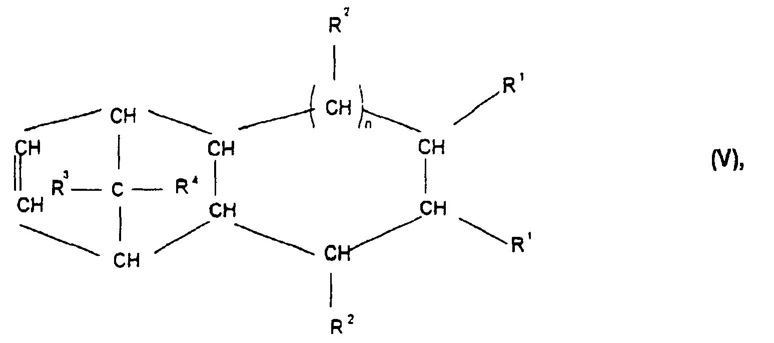 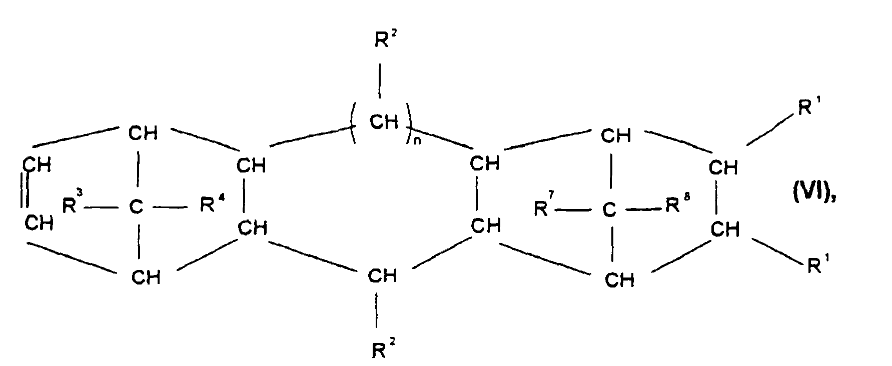 where R¹, R², R³, R⁴, R⁵, R⁶, R⁷ and R⁸, which may be the same or different, are each a hydrogen atom or a C₁-C₂₀ hydrocarbyl radical, such as a linear or branched C₁-C₈ alkyl radical, C₆-C₁₈ aryl radical, C₇-C₂₀ alkylenearyl radical, a cyclic or acyclic C₂-C₂₀ alkenyl radical, or form a saturated, unsaturated or aromatic ring, subject to the proviso that the same R¹ to R⁸ may have different meanings in the various formulae I to VI, and n is from 0 to 5, and 0.1 to 99.9% by weight, based on the total mass of the cycloolefin copolymer, of polymerized units derived from one or more acyclic olefins of the formula VII 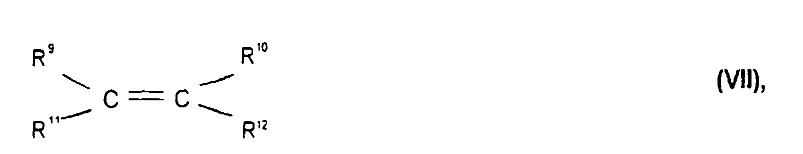 where R⁹, R¹⁰, R¹¹ and R¹², which may be the same or different, are each a hydrogen atom or a linear, branched or saturated or unsaturated C₁-C₂₀ hydrocarbyl radical such as a C₁-C₈ alkyl radical or a C₆-C₁₈ aryl radical, and 0 to 45% by weight, based on the overall composition of the cycloolefin copolymer, of polymerized units derived from one or more monocyclic olefins of the formula VIII 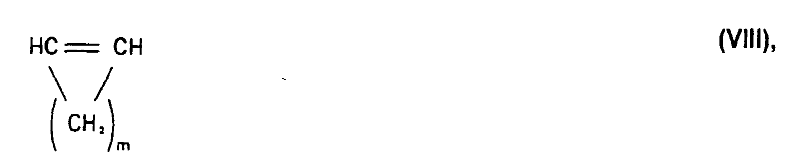 where m is from 2 to 10.

2. Microfiber web obtainable according to claim 1.

3. Use of the microfiber web of claim 1 or 2 as an oil absorber or as an insulation material.

4. Use of the microfiber web of claim 1 or 2 as a particle filter in indoor-air and clean-room technology and building and home services technology, as a microfilter in vacuum cleaners, as a passenger car interior filter and also in the respiratory protection sector as particle-filtering breathing masks.

## Revendications

1. Procédé de préparation de non-tissés de microfibres constitués d'au moins un copolymère de cyclooléfine avec un MVR de 1 à 300 ml/10 min, par le procédé de soufflage en fusion (Melt Blown), dans lequel le copolymère de cyclooléfine contient de 0,1 à 99% en poids, sur base de la masse totale du copolymère de cyclooléfine, d'unités polymérisées, lesquelles dérivent d'au moins une oléfine polycyclique de formules I, II, II', III, IV, V ou VI 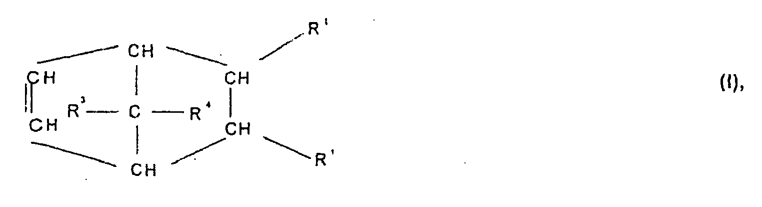 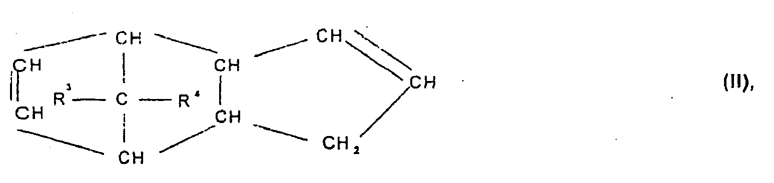 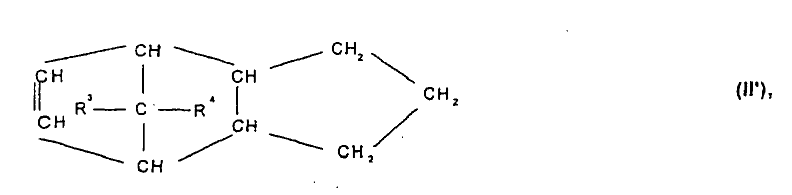 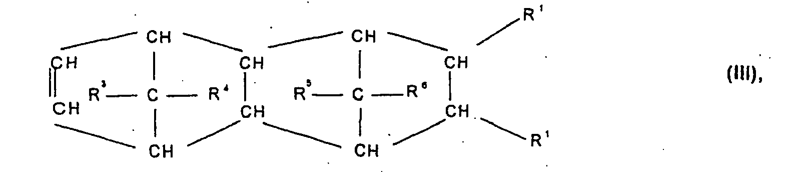 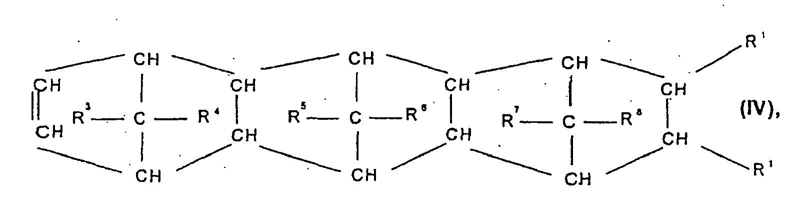 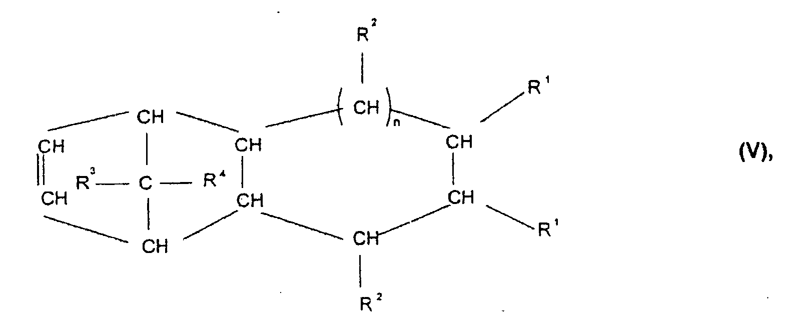 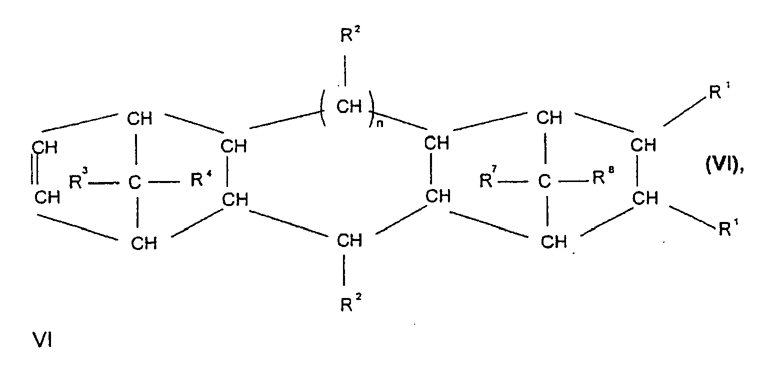 dans lesquelles R¹, R², R³, R⁴, R⁵, R⁶, R⁷ et R⁸ sont identiques ou différents et représentent un atome d'hydrogène ou un radical hydrocarbure en C₁-C₂₀, comme un radical alkyle en C₁-C₈ linéaire ou ramifié, un radical aryle en C₆-C₁₈, un radical alkylènaryle en C₇-C₂₀, un radical alkényle en C₂-C₂₀ cyclique ou acyclique, ou un cycle saturé, insaturé ou aromatique, les radicaux identiques R¹ à R⁸ pouvant avoir, dans les différentes formules I à VI, une signification différente, dans laquelle n peut représenter des valeurs de 0 à 5, et contenant 0,1 à 99,9% en poids, sur base de la masse totale du copolymère de cyclooléfine, des unités polymérisées, lesquelles dérivent d'une ou de plusieurs oléfines acycliques de formule VII 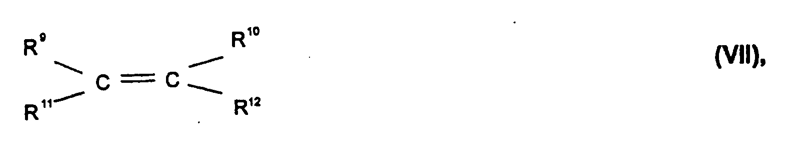 dans laquelle R⁹, R¹⁰, R¹¹ et R¹² sont identiques ou différents et représentent un atome d'hydrogène, un radical hydrocarbure en C₁-C₂₀ linéaire, ramifié, saturé ou insaturé, comme un radical alkyle en C₁-C₈ ou un radical aryle en C₆-C₁₈, et contenant 0 à 45% en poids, sur base de la composition totale du copolymère de cyclooléfine, des unités polymérisées, lesquelles dérivent d'une ou de plusieurs oléfines monocycliques de formule VIII 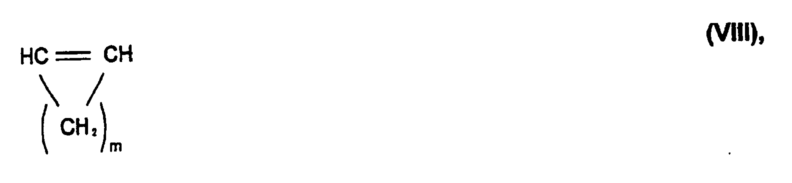 dans laquelle m est un nombre de 2 à 10.

2. Non-tissé de microfibres qu'on obtient selon la revendication 1.

3. Utilisation du non-tissé de microfibres selon la revendication 1 ou 2 comme absorbeur d'huile ou matériau d'isolation.

4. Utilisation du non-tissé de microfibres selon la revendication 1 ou 2 comme filtre à particules dans le secteur de la technique de l'air ambiante ou en chambre propre, dans le secteur de la technique domestique, comme microfiltre dans les aspirateurs, comme filtre d'intérieur pour voitures automobiles ainsi que dans le secteur de la respiration comme masques de respiration filtrant les particules.
